# EUROPEAN PATENT SPECIFICATION

(11) **EP 1 751 995 B1**
(45) Date of publication and mention of the grant of the patent: **02.04.2014**
(21) Application number: 05739954.5
(22) Date of filing: 25.04.2005
(51) Int. Cl.: H04W 4/02, H04W 16/32, H04W 72/04

(54) **A wireless communications network and method of operation thereof**
Drahtloses Kommunikationsnetz und Betriebsverfahren dafür
Réseau de communication sans fil et procédé de fonctionnement associé

(30) Priority: 26.05.2004 GB 0411728
(43) Date of publication of application: 14.02.2007
(73) Proprietor: Motorola Solutions, Inc., Schaumburg IL 60196 (US)
(72) Inventor: JAKOBSEN, Ken,, DK-2600 Glostrup (DK)
(74) Representative: Treleven, Colin
(86) International application number: PCT/US2005/014194
(87) International publication number: WO 2005/120094

(56) References cited:
- EP-A2- 0 292 182
- WO-A1-03/007645
- US-A- 5 214 789
- US-A- 5 353 332
- US-A- 5 815 814
- US-A1- 2005 113 082

## Description

### Field of the Invention

The present invention relates to wireless two-way radio communications networks, in general, and in particular, to a wireless two-way radio communications network and a method for assigning a mobile station to a traffic channel.

### Background of the Invention

In a cellular communication system (like for example the Global System for Mobile communication (GSM) and TETRA (TErrestrial Trunked Radio)), a geographical region is divided into a number of cells each of which is served by a base station. One base station, also termed as Base Transceiver Station (BTS) with a switching infrastructure is referred as a node of the network. The switching infrastructure supporting BTS may be shared with other BTSs. The system infrastructure in a TETRA system is generally referred to as a switching and management infrastructure (SwMI), which substantially contains all of the communication elements apart from the MSs. This includes base transceiver stations (BTSs) connected to a conventional public switched telephone network (PSTN) or internet through base station controllers (BSCs) and mobile switching centres (MSCs). In geographical terms reference to a node is a reference to an area served by one BTS, and in network terms reference to a node is a reference to one BTS and supporting it infrastructure. A remote unit referred also as subscriber or mobile station (MS) or communication unit is served via a radio communication link by the base station of the cell within which the remote unit is operating.

One of the basic advantages of the cellular communications systems is that a subscriber may move from one geographical location to another one while receiving services from the network. To provide seamless service there are regions of overlapping coverage of two base stations. As the subscriber moves from area served by a first base station towards area served by a second base station it enters the region of overlapping coverage. Within the region of overlapping coverage the subscriber changes the serving base station. This is known as cell reselection or handover.

The communication link from a BTS to a subscriber is generally referred to as a downlink communication channel. Conversely, the communication link from a subscriber to a BTS is generally referred to as an uplink communication channel.

To enable communication between two handsets operating in two different cells a fixed network interconnects the base stations. The fixed network is operable to route data between any two base stations and this way allows for communication between these two remote handsets. In addition, the fixed network may comprise gateway functions for interconnecting to external networks such as the Public Switched Telephone Network (PSTN) or the internet. This allows subscribers to communicate with landline telephones and other communication terminals connected by a landline. Additionally the fixed network is adapted to perform functions required for managing a conventional cellular communication network including routing data, admission control, resource allocation, subscriber billing, mobile station authentication etc.

The TETRA communications system may be used as a public cellular communication system. However its main target group are organizations or groups such as emergency services. Special functions and services implemented in the TETRA system make this system especially suitable for services like police, emergency, fire rescue or others. One of such features provided by TETRA system, which is especially useful for the emergency services is controlling group calls as well as managing the membership of these groups. Other features and services provided by TETRA include, push-to-talk channel allocation, broadcast calls etc. In addition to trunked mode operation wherein remote units communicate via a base station, TETRA provides for the possibility of communication directly between remote units without participation of the infrastructure. This is known as Direct Mode Operation (DMO).

One of the important issues related to providing communications in cellular networks is mobility management. Main goal of the mobility management is providing and keeping up-to-date the infrastructure with information on location of the subscribers (i.e. in which cell particular subscriber is operating).

It is known that the range of any digital radio system greatly depends on the bit rate. This is because radio transmitters are usually power limited, so the more bits to send, the less energy can be devoted to each bit. As the receiver depends on the received energy per bit, this naturally requires less path loss for higher bit rate, and hence shorter range. When adding a high speed data overlay to an existing voice or low speed data network, the range of the overlay will therefore typically be less than the existing network. This means that "filler" cells must be added to the network in order to provide carpet coverage -increasing the number of cells by a factor of 2 -3. With an air interface such as the TETRA TEDS (TETRA Enhanced Data Service) high speed data, this means adding 2 -3 times more 25 kHz pi/4 Differential Quaternary Phase Shift Keying (DQPSK) main carriers as well. This latter point will have severe impact on the existing network planning, or will require significant air interface resources without providing much benefit.

Prior art patent application US5353332 shows a radiotelephone system. In US5353332, the control channel of each cell can be configured to broadcast both absolute information about that cell, and relative information about other cells. Each cell can also broadcast information about the location of other control channels. This information is then used to lock a mobile unit to a preferred cell. In US5353332, this locking is controlled by the mobile unit. WO-A-03007645 shows a hierarchical cellular communications system. An umbrella macro cell serves an area in which some picocells are also located.

### Summary of the Invention

According to a first aspect of the present invention there is provided a wireless communications network as claimed in claim 1.

According to a second aspect of the present invention there is provided a method of assigning a mobile station to a traffic channel in a wireless communications network as claimed in claim 9.

The present invention beneficially allows for increasing data speed in a communication network while minimizing resources necessary to provide the service in the network (no additional control channels are required).

### Brief description of the drawings

The present invention will be understood and appreciated more fully from the following detailed description taken in conjunction with the drawings in which:
FIG. 1 is a simplified diagram illustrating a wireless communication network in one embodiment of the present invention,
FIG. 2 is a flow chart illustrating a method of operating a wireless communication network in one embodiment of the present invention.

### Description of an embodiment of the invention

The following description focuses on an embodiment of the invention applicable to a TETRA cellular communication system. However, it will be appreciated - that the invention is not limited to this application but may be applied to many other communication systems (e.g. ASTRO/APCO 25).

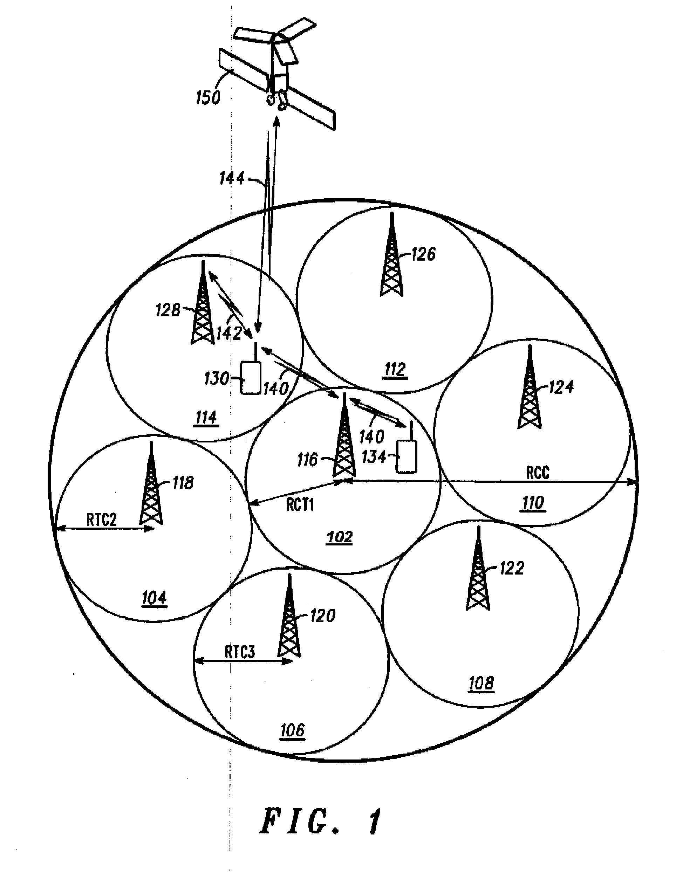

Referring to FIG. 1 one embodiment of the communications network 100 is shown.

The nodes 116 - 128 of the network operate with an increased bit rate of traffic channels. This increase is achieved by reducing energy-per-bit factor. When increasing bit rate of an existing voice or low speed data network, the range of the traffic channels affected by said increase will therefore typically be less than before said increase. This range reduction is a result of a power limit of a transmitter (more bits to be sent using the same energy). By increasing data speed in a network the changes affect the traffic channels and not the control channels. In result the range RCC of control channel remains on the same level whereas range RTC1 of traffic channels will be reduced. To compensate the reduced range additional sites, in form of overlay, must be added.

The network 100 comprises a plurality of sites 102-114 each of which is served by a node 116 - 128. Said nodes 116 - 128, are parts of the network 100 infrastructure and form with other elements of the network infrastructure (not shown on for the sake of clarity) a switching and management infrastructure (SwMI). The network also comprises a plurality of mobile stations 130, 134 that operate in different sites of the network 100. In one embodiment, a first site 102 has a first control channel 140, whereas remaining sites 104 - 114 do not have control channels. In this embodiment by increasing data speed in a network the changes affect the traffic channels and in result a range of the traffic channels RTC1 - RTC3 is reduced and less than a range RCC of the first control channel 140, which is not affected by said data speed increase.

Said SwMI is adapted, using said first control channel 140, to direct a mobile station 130, 134 located in a site without or with a control channel to a traffic channel depending on a geographical location of said mobile station 130, 134.

To direct the mobile station 130,-134 to a traffic channel the SWMI must be informed in a range of which node the mobile stations 130, 134 operate.

In one embodiment, if the mobile station 130 is equipped with a Global Positioning System (GPS) unit, the SwMI obtains said GPS location data and uses it for directing the mobile station 130 to a traffic channel.

In alternative embodiment said SwMI obtains said geographical location of said mobile station 134 by analyzing signals received from said mobile station 134. Said SwMI calculates the position of the mobile station 134 based on an angle of arrival or RSSI or triangulation or any combination thereof. It is clear for the specialist in the art how to apply the mentioned_methods.

It is clear that in alternative embodiments the number of sites with control channel can be higher than one.

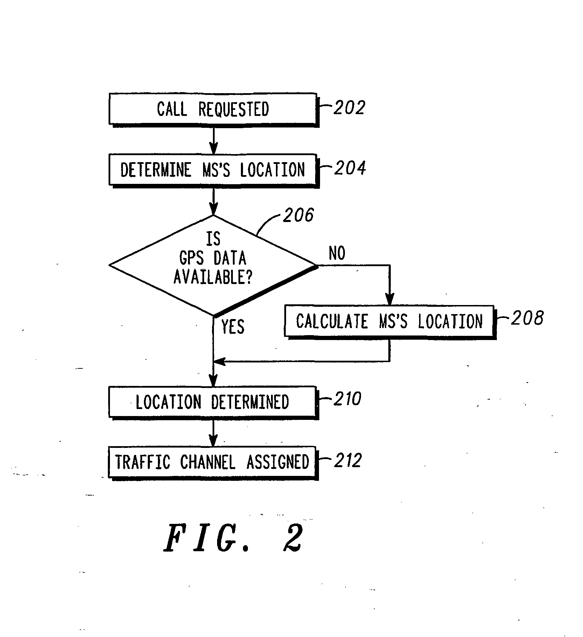

Referring to FIG. 2 one embodiment of a method of assigning a mobile station to a traffic channel in a wireless communications network is shown.

If a mobile station 130 is within a site, which does not have a control channel, but within a range RCC of a first control channel 140 said first control channel 140 can be used to direct the mobile station 130 to a traffic channel, in most situations it is a traffic channel provided by a node which is closest to the mobile station 130. However in specific situations caused, for example, by topography of the area in which the mobile station operates, the traffic channel need not be provided by the closest node, but by a node providing a traffic channel of the highest signal strength.

When the mobile station 130 using the first control channel 140 requests connection to a traffic channel the SwMI determines 204 geographic location of the mobile station 130 to identify which node should provide said traffic channel to said mobile station 130.

In one embodiment, if the mobile station 130 is equipped with a GPS unit 206, the mobile station 130 transmits to the SwMI, using the first control channel 140, its location obtained via GPS channel 144. When said location of said mobile station 130 is determined 210 the SwMI identifies the node which should provide said traffic channel to said mobile station. Finally a traffic channel 142 is assigned 212 to provide communication between said mobile station 130 and said node 128 (and in consequence with remaining part of the network and also with other communications networks).

In an alternative embodiment, when GPS signal is not available, or when the mobile station does not have GPS unit the SwMI calculates 208 location of the mobile station 134 based on some parameters of a radio signal received from said mobile station 134. It may be an angle of arrival of the signal from said mobile station 134 or Received Signal Strength Indication (RSSI), or triangulation, or any combination thereof.

In various embodiments the calculations of location of the mobile stations, and other functions of the SwMI, may be carried out by a Base Transceiver Station, a Base Station Controller or by a Mobile Switching Centre or by a stand-alone computing device operably connected to a fixed network that interconnects the infrastructure of the network 100.

## Claims

1. A wireless two-way radio communications network (100) comprising a plurality of sites (102 - 114) each of which is served by a node (116 - 128), and said nodes (116 - 128) are connected with other elements of the network infrastructure, and further comprising a plurality of mobile stations (130, 134), wherein at least one of said plurality of sites (102) is served by a node having a first control channel (140) and the remaining sites (104 - 114) are served by nodes without control channels, wherein said remaining sites without control channels form a high speed data overlay on the at least one site with a control channel, wherein said network infrastructure is adapted to receive on the control channel a request from a mobile station for connection to a traffic channel, to assign using a current location of the mobile station a traffic channel suitable for use by the mobile station in a selected site without a control channel, and using said first control channel (140), to direct the mobile station (130) to use a node in the selected site for connection to the traffic channel.

2. The network (100) according to claim 1, wherein said network infrastructure is further adapted, using said first control channel (140), to direct a mobile station (134) located in said site (102) with said first control channel (140) to a traffic channel.

3. The network (100) according to claim 1, wherein said current location of said mobile station (130, 134) is obtained from a separate radio data channel.

4. The network (100) according to claim 3, wherein said separate radio data channel is a Global Positioning System, GPS, channel (144).

5. The network (100) according to claim 1, wherein said network infrastructure is adapted to obtain a geographical location of said mobile station by analyzing signals received from said mobile station (130, 134).

6. The network (100) according to claim 5, wherein said network infrastructure is adapted to use an angle of arrival or received signal strength indication, RSSI, or triangulation or any combination thereof to obtain the geographical location of said mobile station (130, 134).

7. The network (100) according to claim 1 and which is operable according to TETRA or ASTRO/APCO-25 standards.

8. The network (100) according to claim 1, wherein said nodes (116 - 128) are adapted to increase a bit rate of traffic channels by reducing energy-per-bit factor.

9. A method of operation in a wireless two-way radio communications network, said network comprising a plurality of sites (102 - 114) each of which is served by a node (116 - 128), and said nodes (116 - 128) are connected with other elements of the network infrastructure, and further comprising a plurality of mobile stations (130, 134), wherein at least one of said plurality of sites (102) is served by a node having a first control channel (140) and the remaining sites (104 - 114) are served by nodes without control channels, wherein said remaining sites without control channels form a high speed data overlay on the at least one site with a control channel, the method including said network infrastructure receiving on the control channel a request from a mobile station for connection to a traffic channel, assigning using a current location of the mobile station a traffic channel suitable for use by the mobile station in a selected site without a control channel, and using said first control channel (140), directing (212) the mobile station to use a node in the selected site for connection to the traffic channel.

## Patentansprüche

1. Drahtloses Zweiwege-Funkkommunikations-Netzwerk (100) mit einer Mehrzahl von Standorten (102 - 114), die alle durch einen Knoten (11 - 128) bedient werden, wobei die Knoten (11 - 128) mit anderen Elementen der Netzwerkinfrastruktur verbunden sind, und das weiterhin eine Mehrzahl von Mobilstationen (130, 134) aufweist, wobei wenigstens einer der Mehrzahl von Standorten (102) durch einen Knoten bedient wird, der einen ersten Steuerkanal (140) aufweist, und die verbleibenden Standorte (104 - 114) durch Knoten ohne Steuerkanäle bedient werden, wobei die verbleibenden Standorte ohne Steuerkanäle ein Hochgeschwindigkeits-Daten-Overlay an dem wenigstens einen Standort mit einem Steuerkanal bilden, wobei die Netzwerkinfrastruktur geeignet ist, auf dem Steuerkanal eine Anfrage von einer Mobilstation zum Verbinden mit einem Verkehrskanal zu empfangen, unter Verwendung eines aktuellen Ortes der Mobilstation einen für die Verwendung durch die Mobilstation geeigneten Verkehrskanal in einem ausgewählten Standort ohne einen Steuerkanal zuzuweisen und den ersten Steuerkanal (140) zu verwenden, um die Mobilstation (130) anzuweisen, einen Knoten an dem ausgewählten Standort für eine Verbindung zu dem Verkehrskanal zu verwenden.

2. Netzwerk (100) nach Anspruch 1, wobei die Netzwerkinfrastruktur unter Verwendung des ersten Steuerkanals (140) weiterhin geeignet ist, eine Mobilstation (134), die sich an dem Standort (102) mit dem ersten Steuerkanal (140) befindet, zu einem Verkehrskanal zu leiten.

3. Netzwerk (100) nach Anspruch 1, wobei der aktuelle Ort der Mobilstation (130, 134) aus einem separaten Funkdatenkanal erhalten wird.

4. Netzwerk (100) nach Anspruch 3, wobei der separate Funkdatenkanal ein GPS-Kanal (Global Positioning System) (144) ist.

5. Netzwerk (100) nach Anspruch 1, wobei die Netzwerkinfrastruktur geeignet ist, einen geografischen Ort der Mobilstation durch Analyse von Signalen zu erhalten, die von der Mobilstation (130, 134) empfangen werden.

6. Netzwerk (100) nach Anspruch 5, wobei die Netzwerkinfrastruktur geeignet ist, einen Eingangswinkel oder einen RSSI-Wert (Wert zur Anzeige der empfangenen Signalstärke) oder eine Triangulation oder irgendeine Kombination davon zu verwenden, um den geografischen Ort der Mobilstation (130, 134) zu erhalten.

7. Netzwerk (100) nach Anspruch 1, das gemäß dem TETRA- oder ASTRO/APCO-25-Standard betreibbar ist.

8. Netzwerk (100) nach Anspruch 1, wobei die Knoten (116 - 128) geeignet sind, um eine Bitrate des Verkehrskanals zu erhöhen, indem der Energie-pro-Bit-Faktor verringert wird.

9. Verfahren zum Betreiben eines drahtlosen Zweiwege-Funkkommunikations-Netzwerkes, wobei das Netzwerk eine Mehrzahl von Standorten (102 - 114) umfasst, die alle durch einen Knoten (116 - 128) bedient werden, wobei die Knoten (116 - 128) mit anderen Elementen der Netzwerkinfrastruktur verbunden sind, und das weiterhin eine Mehrzahl von Mobilstationen (130, 134) aufweist, wobei wenigstens einer der Mehrzahl von Standorten (102) durch einen Knoten bedient wird, der einen ersten Steuerkanal (140) aufweist, und die verbleibenden Standorte (104 - 114) durch Knoten ohne Steuerkanäle bedient werden, wobei die verbleibenden Standorte ohne Steuerkanäle ein Hochgeschwindigkeits-Daten-Overlay an dem wenigstens einen Standort mit einem Steuerkanal bilden, wobei das Verfahren umfasst, dass die Netzwerkinfrastruktur auf dem Steuerkanal eine Anfrage von einer Mobilstation zum Verbinden mit einem Verkehrskanal empfängt, unter Verwendung eines aktuellen Ortes der Mobilstation einen für die Verwendung durch die Mobilstation geeigneten Verkehrskanal in einem ausgewählten Standort ohne einen Steuerkanal zuweist und den ersten Steuerkanal (140) verwendet, um die Mobilstation anzuweisen (212), einen Knoten an dem ausgewählten Standort für eine Verbindung zu dem Verkehrskanal zu verwenden.

## Revendications

1. Réseau de communications radio bidirectionnel sans fil (100) comprenant une pluralité de sites (102-114) dont chacun est desservi par un noeud (116-128), et lesdits noeuds (116-128) sont connectés avec d'autres éléments de l'infrastructure de réseau, et comprenant en outre une pluralité de stations mobiles (130, 134), dans lequel au moins un de ladite pluralité de sites (102) est desservi par un noeud ayant un premier canal de contrôle (140) et les sites restants (104-114) sont desservis par des noeuds sans canaux de contrôle, dans lequel lesdits sites restants sans canaux de contrôle forment un recouvrement de données à haute vitesse sur le au moins un site avec un canal de contrôle, dans lequel ladite infrastructure de réseau est adaptée pour recevoir sur le canal de contrôle une demande en provenance d'une station mobile pour la connexion à un canal de trafic, pour affecter en utilisant une localisation actuelle de la station mobile un canal de trafic approprié pour l'utilisation par la station mobile dans un site sélectionné sans canal de contrôle, et en utilisant ledit premier canal de contrôle (140), pour diriger la station mobile (130) pour utiliser un noeud dans le site sélectionné pour la connexion au canal de trafic.

2. Réseau (100) selon la revendication 1, dans lequel ladite infrastructure de réseau est en outre adaptée, en utilisant ledit premier canal de contrôle (140), pour diriger une station mobile (134) localisée dans ledit site (102) avec ledit premier canal de contrôle (140) vers un canal de trafic.

3. Réseau (100) selon la revendication 1, dans lequel ladite localisation actuelle de ladite station mobile (130, 134) est obtenue à partir d'un canal de données radio séparé.

4. Réseau (100) selon la revendication 3, dans lequel ledit canal de données radio séparé est un canal de système mondial de positionnement, GPS, (144).

5. Réseau (100) selon la revendication 1, dans lequel ladite infrastructure de réseau est adaptée pour obtenir une localisation géographique de ladite station mobile en analysant des signaux reçus de ladite station mobile (130, 134).

6. Réseau (100) selon la revendication 5, dans lequel ladite infrastructure de réseau est adaptée pour utiliser un angle d'arrivée ou une indication d'intensité du signal reçu, RSSI, ou une triangulation ou toute combinaison de ceux-ci pour obtenir la localisation géographique de ladite station mobile (130, 134).

7. Réseau (100) selon la revendication 1 et qui est exploitable selon les normes TETRA ou ASTRO/APCO-25.

8. Réseau (100) selon la revendication 1, dans lequel lesdits noeuds (116-128) sont adaptés pour augmenter un débit binaire de canaux de trafic en réduisant le facteur d'énergie par bit.

9. Procédé d'exploitation dans un réseau de communications radio bidirectionnel sans fil, ledit réseau comprenant une pluralité de sites (102-114) dont chacun est desservi par un noeud (116-128), et lesdits noeuds (116-128) sont connectés avec d'autres éléments de l'infrastructure de réseau, et comprenant en outre une pluralité de stations mobiles (130, 134), dans lequel au moins un de ladite pluralité de sites (102) est desservi par un noeud ayant un premier canal de contrôle (140) et les sites restants (104-114) sont desservis par des noeuds sans canaux de contrôle, dans lequel lesdits sites restants sans canaux de contrôle forment un recouvrement de données à haute vitesse sur le au moins un site avec un canal de contrôle, le procédé comprenant ladite infrastructure de réseau recevant sur le canal de contrôle une demande en provenance d'une station mobile pour la connexion à un canal de trafic, affectant en utilisant une localisation actuelle de la station mobile un canal de trafic approprié pour l'utilisation par la station mobile dans un site sélectionné sans canal de contrôle, et en utilisant ledit premier canal de contrôle (140), dirigeant (212) la station mobile pour utiliser un noeud dans le site sélectionné pour la connexion au canal de trafic.
